# EUROPEAN PATENT SPECIFICATION

(11) **EP 1 143 588 B1**
(45) Date of publication and mention of the grant of the patent: **09.02.2011**
(21) Application number: 01200692.0
(22) Date of filing: 23.02.2001
(51) Int. Cl.: H02B 1/20

(54) **Upright for electric board**
Ständerelement für elektrisches Schaltfeld
Montant pour tableau électrique

(30) Priority: 03.03.2000 IT MI000429
(43) Date of publication of application: 10.10.2001
(73) Proprietor: ABB S.p.A., 20124 Milano (IT)
(72) Inventor: Friargiu, Amos, 30010 Fonte (TV) (IT); Pezzato, Maurizio, 36067 San Giuseppe di Cassola (VI) (IT)
(74) Representative: Giavarini, Francesco

(56) References cited:
- DE-B- 2 711 741
- DE-U- 7 723 493
- FR-A- 2 538 990

## Description

The present invention relates to an upright for electrical boards, particularly for electrical distribution boards or mixed distribution and automation boards, and to a board which uses said upright. More particularly, the upright according to the invention distinguishes itself with respect to known types of upright owing to its multifunctional constructive structure, which allows to reduce the components used to manufacture the board, simplify its assembly steps and reduce its installation times.

It is known that electrical boards, both for distribution and for mixed distribution and automation, use a containment enclosure inside which multiple electrical devices, such as for example modular switches, moulded case switches, residual-current blocks et cetera, suitable to be connected electrically to a supply mains, are appropriately arranged. In particular, said electrical devices are arranged along one or more mutually parallel rows, in which the devices that belong to a same row are arranged side by side and are coupled to known metallic fixing guides, for example guides of the DIN type; in turn, the fixing guides are connected, at their opposite ends, to two uprights so as to form a supporting frame which is fixed monolithically to the internal walls of the enclosure.

An upright with the features of the preamble of claim 1 is disclosed in FR 2 538 990 A.

Alternatively, the guides can be fixed directly to the walls of the enclosure by using appropriate fixing devices which are formed directly on the internal surfaces of said enclosure or are applied thereto.

As regards the electrical connections, the various electrical devices are electrically connected to the supply mains by virtue of appropriate wiring with power supply cables. These cables are made to pass inside the enclosure and are inserted, according to a solution which is widely used in the art, in appropriately configured containment ducts, or channels, which contain them and protect them against accidental damage; with respect to a front view of the board, wiring can be provided by passing the cables in front of the frame or behind it.

In the current state of the art, this constructive solution, despite allowing to adequately perform the intended functions, is not entirely satisfactory, particularly as regards the steps of installing and wiring said board.

In particular, since the containment ducts are structurally separate components with respect to the uprights, during board assembly it is necessary to connect each duct to the corresponding upright; these connections are provided for example by means of screws and rivets, and in addition to requiring the use of these additional fixing means they entail an increase in assembly difficulties and a consequent expenditure of time on the part of the installer, especially when the space available is limited. Furthermore, the conductor containment ducts, before being connectable to the corresponding uprights, must be cut beforehand so as to make their dimensions suitable to the board to be provided. This evidently entails an additional operating step, a waste of material, an additional expenditure of time and ultimately an increase in installation costs.

Additional drawbacks of known types of solution are linked to the operations required to fix the guides to the uprights, especially as regards their depth adjustment, and to fix the uprights to the enclosure. The connection between the guides and the uprights is in fact provided by using known interconnection devices. These devices are fixed to the guides and are inserted in appropriately provided slots formed in the structure of the upright; once the intended position has been reached, the interconnection devices are fixed to the upright by means of screws or similar fixing means. As regards the mutual fixing of the uprights and the enclosure, one of the most commonly used solutions employs additional connection devices, which are applied to the walls of the enclosure and couple mechanically to the upper and lower parts of said uprights. This clearly contributes to increase the number of components required, in addition to increasing the time and cost required to provide the boards.

Another drawback of known solutions is the fact that when the wiring of the electrical devices is provided in the rear part of the frame, the installer is forced to keep the frame tilted toward the front part of the enclosure so as to have available the space required to perform the wiring. This solution is clearly unsatisfactory, since it forces operators to work in awkward conditions, accordingly entailing increased difficulties and longer assembly times, especially in the case of electrical devices arranged on multiple guides.

The aim of the present invention is to provide an upright for an electrical board which allows to reduce the number of components required to manufacture the board with respect to the state of the art.

Within the scope of this aim, an object of the present invention is to provide an upright for an electrical board which allows to considerably simplify the steps of the assembly of the various components and to facilitate the connections to the various electrical devices used in the board, thus reducing the assembly times regardless of the configuration to be provided. Another object of the present invention is to provide an upright for an electrical board which allows to reduce the operations that an operator is required to perform while allowing to minimize the fixing and connection means used.

Another object of the present invention is to provide an upright for an electrical board which is highly reliable, relatively easy to manufacture and at competitive costs.

This aim, these objects and others which will become apparent hereinafter are achieved by an upright for an electrical board, suitable to be operatively connected to one or more fixing elements which can support electrical devices meant to be connected to a supply mains, characterized in that it comprises a substantially longitudinally elongated body which has a first part, which is shaped so as to form at least one wall for coupling to a fixing element, and a second part, which is structurally monolithic with said first part and is shaped so as to form a duct which is suitable to accommodate conductors which are meant to electrically connect said devices to the supply mains.

In this manner, in practice one obtains a multifunctional upright which integrates in a single body the part meant for connection to the fixing guides, the part meant to accommodate the conductors for connection to the electrical devices of the board, and the front panels for protecting the board, according to an extremely simple and effective solution.

Further characteristics and advantages of the invention will become apparent from the description of preferred but not exclusive embodiments of the upright according to the invention, illustrated only by way of non-limitative example in the accompanying drawings, wherein:
Figure 1 is a perspective view of the upright according to the invention;
Figure 2 is a plan view of the upright of Figure 1;
Figure 3 is a perspective view of a pair of uprights according to the invention, connected to fixing guides on which electrical devices are arranged;
Figure 4 is a perspective view of interconnection means which can be used to connect the fixing guides to the upright.

The upright according to the invention is described with reference to its use in electrical boards without intending in any way to limit the scope of its application; in fact, the term electrical board is to be understood as including electrical devices which are similar and technically equivalent to electrical boards, indicated for example as electrical cabinets, panelboards, switchboards, electrical boxes etcetera.

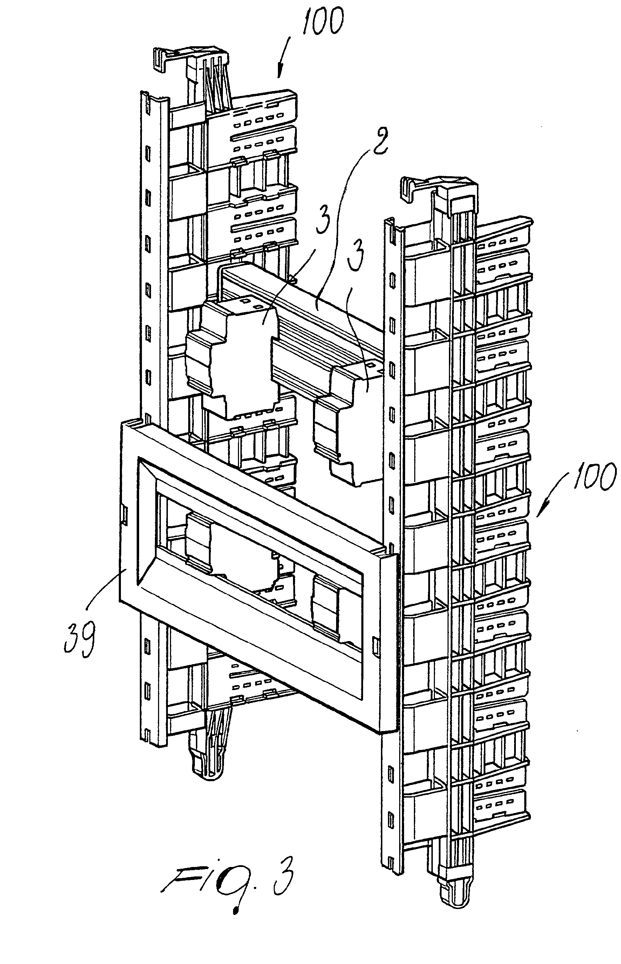

With reference to the above cited figures, the upright for electrical board according to the invention, generally designated by the reference numeral 100, comprises a substantially longitudinally elongated body which is made for example of plastic by injection molding and has a first part 1 which is shaped so as to form at least one wall 30 for coupling to a fixing element, preferably a fixing guide 2. The fixing elements 2, which can be constituted by guides of the DIN type with a single or double profile, as shown schematically in Figure 3, or by so-called partial backplates, or by mounting plates, allow to fix electrical devices 3 which constitute the electrical equipment of the board and are meant to be connected to a supply mains. For example, depending on the intended board configuration, said electrical devices 3, which can comprise modular circuit breakers, residual-current blocks, power circuit breakers et cetera, are arranged on one or more fixing guides; the constructive embodiment of these devices, as well as the manner in which they are connected electrically to the supply mains, are widely known in the art and therefore are not described in detail. Advantageously, the body of the upright 100 comprises a second part 4 which is structurally monolithic with the first part 1 and is shaped so as to form a duct 5 which is suitable to accommodate conductors, e.g. wires or cables, which are meant to electrically connect the electrical devices 3 to the supply mains. In this manner, the upright 100 integrates in its body the duct for containing the conductors, according to a solution which is simple from the constructive point of view and effective from the functional point of view, with significant advantages with respect to the state of the art. In particular, this solution allows to reduce the time and cost of assembling the board, since the number of constructive components is reduced and the operations required to connect the ducts and the uprights are eliminated, with a consequent saving on the corresponding fixing means. Furthermore, it is not necessary to cut the ducts in order to size them according to the required application, since the upright 100 is sized already during the production step in accordance with the standard dimensions of the board to be provided.

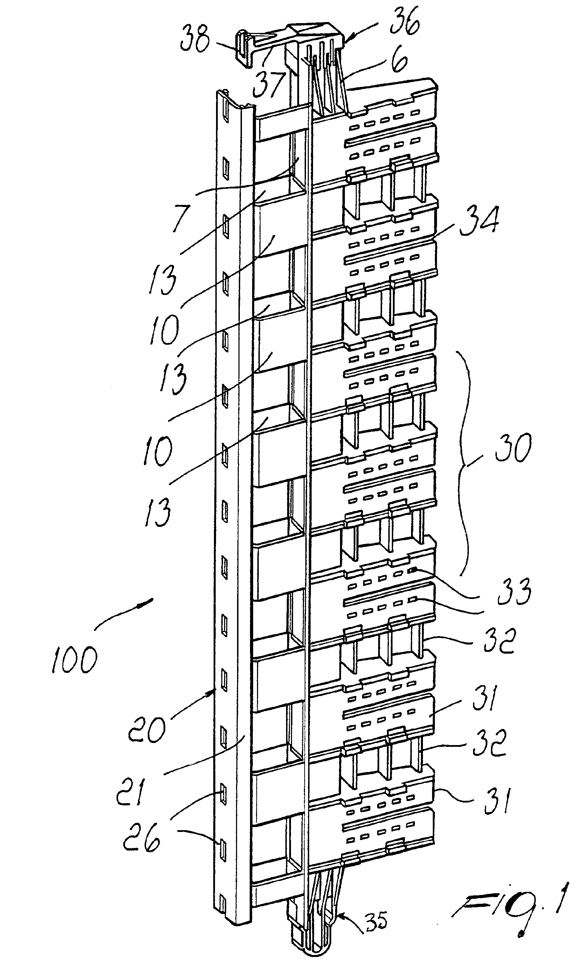

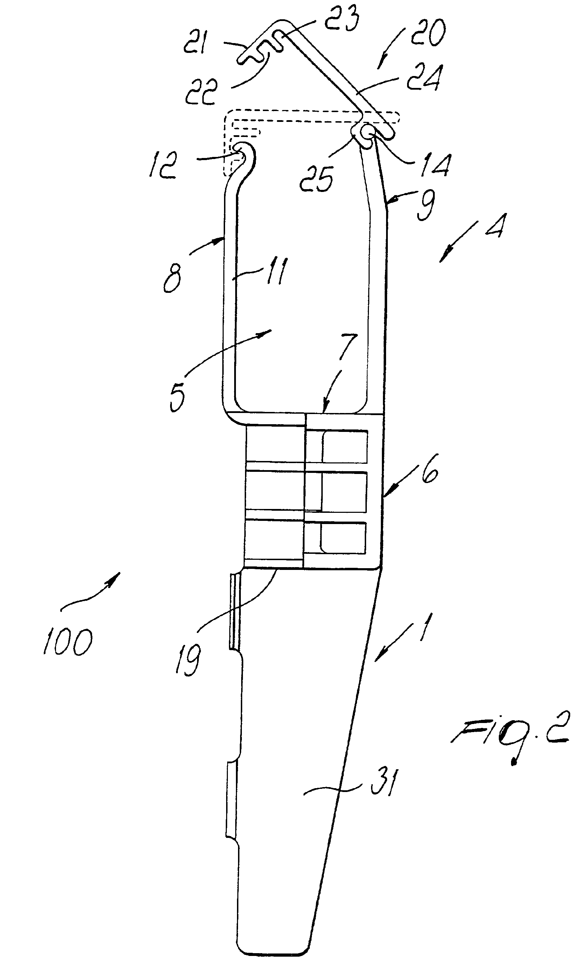

As shown in detail in Figures 1 and 2, the first shaped part 1 comprises a supporting element 6 which lies substantially along the entire longitudinal extension of the body; a first wall 7 of said supporting element 6 constitutes the back wall of the duct 5. The duct 5 furthermore comprises a first side wall 8 and a second side wall 9 which are substantially parallel to each other and protrude from the back wall 7 transversely to it.

The first side wall 8 has a plurality of teeth 10 which are arranged so as to be spatially separate from each other and lie along a first edge of the back wall 7; said teeth 10 have a wall which has a substantially straight transverse profile 11 with a hook-shaped end 12 which is suitable to facilitate coupling to an element 20 for closing said duct, which in practice acts as a cover for said duct.

Multiple openings 13 having a substantially rectangular profile are formed along the second side wall 9, each one is arranged at a tooth 10; this solution is advantageous from the manufacturing point of view, since it allows easier extraction of the uprights from the molds as well as a constructive simplification of said molds. As an alternative, the wall 9 might be shaped differently; for example, it might be solid along its entire extension. Furthermore, the end of the second side wall 9 that lies opposite the back wall 7 has a circular edge 14 which is also suitable to facilitate coupling to the closure element 20.

In turn, the element 20 for closing the duct 5 has a substantially L-shaped transverse cross-section; a first wing 21 of said L-shaped cross-section is shaped so as to form a seat 22 which is suitable to accommodate the hook-shaped end 12 of the teeth 10. In particular, the wing 21 is substantially F-shaped, and an empty space 23 is formed therein, in addition to the seat 22, between the upper part of the F-shaped element and the second wing 24.

A hook-shaped protrusion 25 is formed along the second wing 24 of the L-shaped cross-section and at the substantially opposite end with respect to the wing 21 in order to allow geometric coupling to the circular edge 14. In practice, the closure element 20, which can be provided monolithically with the upright or can be applied separately thereto, is arranged so that the hook-shaped protrusion 25 mates geometrically with the circular edge 14. In this case, the circular edge 14 acts as a hinge about which the element 20 rotates between a first position, shown in solid lines in Figure 2, in which the duct is open, and a second closure position, shown in dashed lines in Figure 2. In the closed position, the hook-shaped end 12 enters the seat 22; in this case, the space 23 prevents the element 20 from assuming an inclined position with respect to the side walls during closure operations. Clearly, the closure element 20, and particularly the wing 21, might be shaped differently, so long as the shape is compatible with the application. The closure element 20 furthermore has, along its longitudinal extension, a plurality of openings 26 which allow snap-together connection with panels 39 for protecting the electrical devices 3, as shown in Figure 3.

In turn, the coupling wall 30 comprises a plurality of teeth 31, each of which is suitable to be connected to a corresponding fixing guide 2; in particular, as shown in Figure 2, the supporting element 6 has a substantially rectangular transverse cross-section, in which the duct 5 and the connecting teeth 31 protrude in two mutually opposite directions with respect to said supporting element, according to a solution which is effective as regards the overall dimensions of the upright.

The teeth 31 are substantially cantilever-like arranged along a second wall 19 of the supporting element 6 and are mutually spaced; the connection between adjacent pairs of teeth 31 is provided by means of stiffening ribs 32, according to a solution which allows to reduce the amount of material used while ensuring the necessary structural rigidity.

The connection teeth 31 have a plurality of through openings 33, which are arranged along two substantially mutually parallel rows, and a longitudinal slot 34 which is arranged in an intermediate position between the two rows. This configuration significantly facilitates the adjustment of the position of the fixing guides 2 deeply inside the enclosure of the board and their connection to the upright.

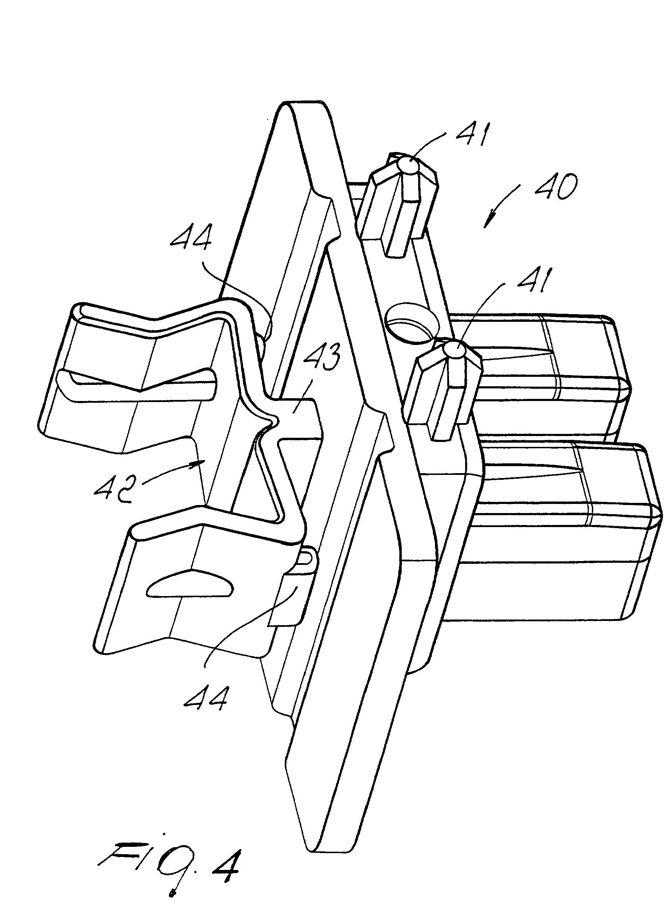

The connection of the guides 2 to the upright in fact occurs by using appropriate interconnection means. An example of interconnection means is shown schematically in Figure 4. Said interconnection means 40 comprise two pins 41, which are suitable to mate with corresponding holes formed in the guides 2, and a wing-shaped wall 42 which has a central block 43 which is made to slide in the corresponding slot 34; there are also two additional pins 44 which mate with a snap action with two corresponding openings 33. In this manner, the position of the guides is adjusted simply by sliding the block 43 in the corresponding slot 34; subsequent engagement occurs by virtue of a snap coupling between the pins 44 and the slots 33, without the need to use additional fixing means, such as for example screws, ultimately simplifying the operations that the installer needs to perform. The supporting element 6 furthermore has a first end 35 and a second end 36 which are substantially mutually opposite and are shaped so as to facilitate the connection of the upright to a containment enclosure, not shown. In particular, the first end 35 has a head which has a surface provided with a circular profile which is suitable to mate geometrically with a correspondingly complementarily shaped seat formed in the enclosure of the board. In turn, the second end 36 has a lug 37 which is fixed in a cantilever-like fashion to said element 6; at the free end of the lug 37 there is, in a substantially perpendicular position, a tooth 38 which is suitable to engage a corresponding seat formed in the enclosure. The ends 35 and 36 can be formed monolithically with the body of the upright 100 or can be applied thereto as separate elements.

With this solution, the connection of the upright to the enclosure of the board is extremely simple; it is in fact sufficient to insert the end 35 in the corresponding seat, turning the upright until the tooth 38 mates with a snap action with its corresponding seat, without requiring additional constructive components to be applied to the enclosure and without additional fixing means.

As mentioned, the upright according to the invention is particularly suitable for use in many different types of electrical boards, electrical cabinets, panel or the like; accordingly, the present invention also relates to an electrical board, characterized in that it comprises at least one upright according to the invention.

In particular, in this case, and as shown in Figure 3, the electrical devices 3 of the board are arranged on fixing guides 2; in turn, the guides are connected, at their opposite ends, to two uprights 100 according to the invention, in accordance with the preceding description. The resulting assembly is then inserted in the enclosure of the board so that the ends 35 and 36 mate with the corresponding seats. Once the various electrical connections have been provided between the conducting cables that pass inside the ducts 5 and the electrical devices 3, the protective panels 39 are installed, mating them with a snap-together action with the walls of the openings 26.

In practice it has been found that the upright according to the invention fully achieves the intended aim and objects; it is also noted that all the innovative functions and the inventive aspects of the invention can be obtained by using commonly commercially available elements and materials with extremely low costs.

In practice, the materials used, as well as the dimensions, may be any according to the requirements and the state of the art.

## Claims

1. An upright (100) for an electrical board, suitable to be operatively connected to one or more fixing elements (2) which can support electrical devices (3) meant to be connected to a supply mains comprising a substantially longitudinally elongated body which has a first part (1), which is shaped so as to form at least one wall (30) for coupling to a fixing element (2), **characterized in that** the elongated body comprises a second part (4), which is structurally monolithic with said first part (1) and is shaped so as to form a duct (5) which is suitable to accommodate conductors which are meant to electrically connect said devices (3) to the supply mains.

2. The upright according to claim 1, **characterized in that** said first shaped part (1) comprises a supporting element (6) which runs substantially along the entire longitudinal extension of the body, a first wall (7) of said supporting element (6) constituting a back wall of the duct (5), said duct comprising a first side wall (8) and a second sidewall (9) which are substantially parallel to each other and protrude from the back wall (4) transversely to it.

3. The upright according to claim 2, **characterized in that** said first side wall (8) has a plurality of teeth (10) which are arranged so as to be spatially mutually separate along a first edge of the back wall (7) said teeth (10) having a wall which has a substantially straight transverse profile (11) with a hook-shaped end (12) which is suitable to facilitate mating with an element for closing said duct (5).

4. The upright according to claim 3, **characterized in that** multiple openings having a substantially rectangular profile are formed along said second side wall (9) and are arranged at said teeth (10), the end of said second side wall (9) that lies opposite the bottom wall having a circular edge (14) which is suitable to facilitate mating with said closure element (20).

5. The upright according to claim 4, **characterized in that** said duct closure element (20) has a substantially L-shaped transverse cross-section, a first wing of said L-shaped cross-section being shaped so as to form a seat (22) which is suitable to accommodate the hook-shaped end (12) of said teeth (10), a hook-shaped protrusion (25) being formed along a second wing of said L-shaped cross-section in order to allow geometric mating with said circular edge (14).

6. The upright according to claim 5, **characterized in that** said closure element (20) has, along its longitudinal extension, a plurality of openings (26) which are suitable to facilitate mating with panels (39) for protecting said electrical devices (3).

7. The upright according to one or more of the preceding claims, **characterized in that** the coupling wall (30) comprises a plurality of connection teeth (31) which are arranged substantially in a cantilever-like configuration along a second wall of the supporting element and are mutually spaced, said connection teeth (31) being interconnected in pairs by virtue of stiffening ribs (32).

8. The upright according to claim 7, **characterized in that** said supporting element (6) has a substantially rectangular transverse cross-section, said duct (5) and said connection teeth (31) protruding in two mutually opposite directions with respect to said supporting element (6)

9. The upright according to claim 7, **characterized in that** said connection teetht (3) have a plurality of through openings (33), which are arranged along two substantially mutually parallel rows, and a longitudinal slot (34), which is arranged in an intermediate position between said two rows, said slot and said openings (33) allowing respectively the positioning of means for interconnection with said fixing elements (2) and snap-together mating therewith.

10. The upright according to one or more of the preceding claims, **characterized in that** said supporting element (6) as a first end (35) with a surface provided with a circular profile which is suitable to mate geometrically with a correspondingly complementarily shaped seat formed in an enclosure for containing the board.

11. The upright according to claim 10, **characterized in that** said supporting element (6) has a second end (36) which lies substantially opposite said first end (35) and has a lug which is fixed in a cantilever-like configuration to said element, a tooth (38) being formed in a substantially transverse position at the free end of said lug and being suitable to engage a corresponding seat formed in the enclosure.

12. An electrical board comprising a containment enclosure, one or more fixing elements (2) on which electrical devices (3) suitable to be connected electrically to a supply mains are arranged, and at least two uprights (100) which are suitable to be connected to said one or more fixing elements (2), **characterized in that** at least one of said uprights (100) is constituted by an upright according to one or more of claims 1 to 11.

## Patentansprüche

1. Ständer (100) für eine Elektrotafel, dafür geeignet, wirkmäßig mit einem oder mehreren Befestigungselementen (2) verbunden zu werden, die elektrische Vorrichtungen (3) tragen können, welche zur Verbindung mit einem Stromversorgungsnetz vorgesehen sind, einen im Wesentlichen länglichen Körper aufweisend mit einem ersten Teil (1), der so geformt ist, dass er mindestens eine Wand (30) zum Verkuppeln mit einem Befestigungselement (2) bildet, **dadurch gekennzeichnet, dass** der längliche Körper einen zweiten Teil (4) aufweist, der einstückig mit dem ersten Teil (1) ausgebildet ist und der so geformt ist, dass er einen Schacht (5) bildet, der Leiter aufnehmen kann, die dafür gedacht sind, die Vorrichtungen (3) mit dem Stromversorgungsnetz zu verbinden.

2. Ständer nach Anspruch 1, **dadurch gekennzeichnet, dass** der erste geformte Teil (1) ein Trägerelement (6) aufweist, das im Wesentlichen entlang der gesamten Längenabmessung des Körpers verläuft, wobei eine erste Wand (7) des Trägerelements (6) eine Rückwand des Schachts (5) bildet, wobei der Schacht eine erste Seitenwand (8) und eine zweite Seitenwand (9) aufweist, die im Wesentlichen parallel zueinander sind und die quer zur Rückwand (4) von dieser vorstehen.

3. Ständer nach Anspruch 2, **dadurch gekennzeichnet, dass** die erste Seitenwand (8) eine Vielzahl von Zähnen (10) aufweist, die mit Abstand voneinander entlang eines ersten Randes der Rückwand (7) angeordnet sind, wobei die Zähne (10) eine Wand aufweisen, die ein im Wesentlichen gerades Querprofil (11) mit einem hakenförmigen Ende (12) aufweist, das dafür geeignet ist, das Zusammenfügen mit einem Element zum Verschließen des Schachts (5) zu erleichtern.

4. Ständer nach Anspruch 3, **dadurch gekennzeichnet, dass** mehrere Öffnungen mit einem im Wesentlichen rechteckigen Profil entlang der zweiten Wand (9) ausgebildet und an den Zähnen (10) angeordnet sind, wobei das Ende der zweiten Seitenwand (9), die der Bodenwand gegenüber liegt, einen kreisförmigen Rand aufweist (14), der das Zusammenfügen mit dem Schließelement (20) erleichtern kann.

5. Ständer nach Anspruch 4, **dadurch gekennzeichnet, dass** das Schacht-Schließelement (20) einen im Wesentlichen L-förmigen Querschnitt aufweist, wobei ein erster Schenkel des L-förmigen Querschnitts so geformt ist, dass er einen Sitz (22) bildet, der zur Aufnahme des hakenförmigen Endes (12) der Zähne (10) geeignet ist, wobei ein hakenförmiger Vorsprung (25) entlang eines zweiten Schenkels des L-förmigen Querschnitts ausgebildet ist, um einen Formschluss mit dem kreisförmigen Rand (14) zu ermöglichen.

6. Ständer nach Anspruch 5, **dadurch gekennzeichnet, dass** das Schließelement (20) entlang seiner Längsabmessung eine Vielzahl von Öffnungen (26) aufweist, die ein Zusammenfiigen mit Platten (39) zum Schutz der elektrischen Vorrichtungen (3) erleichtern.

7. Ständer nach einem oder mehreren der vorstehenden Ansprüche, **dadurch gekennzeichnet, dass** die Kupplungswand (30) eine Vielzahl von Verbindungszähnen (31) aufweist, die im Wesentlichen vorkragend entlang einer zweiten Wand des Trägerelements angeordnet und voneinander beabstandet sind, wobei die Verbindungszähne (31) mittels Versteifungsrippen (32) paarweise miteinander verbunden sind.

8. Ständer nach Anspruch 7, **dadurch gekennzeichnet, dass** das Trägerelement (6) einen im Wesentlichen rechtwinkligen Querschnitt aufweist, wobei der Schacht und die Verbindungszähne (31) in zwei einander entgegengesetzten Richtungen in Bezug auf das Trägerelement (6) vorstehen.

9. Ständer nach Anspruch 7, **dadurch gekennzeichnet, dass** die Verbindungszähne (31) eine Vielzahl von durchgehenden Öffnungen (33), die in zwei zueinander im Wesentlichen parallelen Reihen verlaufen, und einen Längsschlitz (34) aufweisen, der an einer mittleren Position zwischen den beiden Reihen angeordnet ist, wobei der Schlitz und die Öffnungen (33) jeweils die Positionierung von Mitteln zur Verbindung mit den Befestigungselementen (2) und deren gegenseitiges Einschnappen ermöglichen.

10. Ständer nach einem oder mehreren der vorangehenden Ansprüche, **dadurch gekennzeichnet, dass** das Trägerelement (6) ein erstes Ende (35) mit einer Oberfläche aufweist, deren Profil kreisförmig ist und durch Formschluss mit einem entsprechend komplementär geformten Sitz, der in einem Gehäuse zur Aufnahme der Platine ausgebildet ist, zusammengefiigt werden kann.

11. Ständer nach Anspruch 10, **dadurch gekennzeichnet, dass** das Trägerelement (6) ein zweites Ende (36) aufweist, das dem ersten Ende (35) im Wesentlichen entgegengesetzt ist und eine Lasche aufweist, die vorkragend an dem Element befestigt ist, wobei ein Zahn (38) im Wesentlichen quer dazu am freien Ende der Lasche ausgebildet ist und in einen entsprechenden Sitz eingreifen kann, der in dem Gehäuse ausgebildet ist.

12. Elektrotafel, die ein Aufnahmegehäuse, eines oder mehrere Befestigungselemente (2), an denen elektrische Vorrichtungen (3) angeordnet sind, die mit einem Stromversorgungsnetz verbunden werden können, und mindestens zwei Ständer (100) aufweist, die mit dem einen oder den mehreren Befestigungselementen (2) verbunden werden können, **dadurch gekennzeichnet, dass** mindestens einer der Ständer (100) ein Ständer nach einem oder mehreren der Ansprüche 1 bis 11 ist.

## Revendications

1. Montant (100) pour un tableau électrique, convenant pour être connecté fonctionnellement à un ou plusieurs éléments de fixation (2) pouvant supporter des dispositifs électriques (3), conçus pour être connectés à un câble d'alimentation, comprenant un corps allongé sensiblement longitudinalement, ayant une première partie (1) configurée pour former au moins une paroi (30) pour couplage à un élément de fixation (2), **caractérisé en ce que** le corps allongé comprend une deuxième partie (4), structurellement monolithique avec ladite première partie (1) et configurée pour former un conduit (5), convenant pour loger des conducteurs conçus pour connecter électriquement lesdits dispositifs (3) au câble d'alimentation.

2. Montant selon la revendication 1, **caractérisé en ce que** ladite première partie (1) configurée comprend un élément support (6), s'étendant sensiblement sur la totalité de l'étendue longitudinale du corps, une première paroi (7) dudit élément support (6) constituant une paroi arrière du conduit (5), ledit conduit comprenant une première paroi latérale (8) et une deuxième paroi latérale (9), sensiblement parallèles entre elles et faisant saillie de la paroi arrière (9), transversalement à celle-ci.

3. Montant selon la revendication 2, **caractérisé en ce que** ladite première paroi latérale (8) comprend une pluralité de dents (10), agencées de manière à être mutuellement séparées spatialement, le long d'un premier bord de la paroi arrière (3), lesdites dents (10) ayant une paroi présentant un profil transversal (11) sensiblement rectiligne muni d'une extrémité (12) en forme de crochet, convenant pour faciliter l'appairage avec un élément pour fermer ledit conduit (5).

4. Montant selon la revendication 3, **caractérisé en ce qu'**une pluralité d'ouvertures, ayant un profil sensiblement rectangulaire, sont formées le long de ladite deuxième paroi latérale (9) et agencées à l'emplacement desdites dents (10), l'extrémité de ladite deuxième paroi latérale (9) située à l'opposé de la paroi de fond ayant un bord (14) circulaire, convenant pour faciliter l'appairage avec ledit élément de fermeture (20).

5. Montant selon la revendication 4, **caractérisé en ce que** ledit élément de fermeture de conduit (20) présente une section transversale sensiblement en forme de L, une première aile de ladite section transversale en forme de L étant configurée pour former un siège (22) convenant pour loger l'extrémité (12) en forme de crochet de ladite dent (10), une saillie (25) en forme de crochet étant formée le long d'une deuxième aile de ladite section transversale en forme de L, de manière à permettre un appairage géométrique avec ledit bord (14) circulaire.

6. Montant selon la revendication 5, **caractérisé en ce que** ledit élément de fermeture (20) présente, le long de son étendue longitudinale, une pluralité d'ouvertures (20) convenant pour faciliter l'appairage avec des panneaux (39) pour protéger lesdits dispositifs électriques (3).

7. Montant selon une ou plusieurs des revendications précédentes, **caractérisé en ce que** la paroi de couplage (30) comprend une pluralité de dents de connexion (31), agencées selon une configuration sensiblement en porte-à-faux le long d'une deuxième paroi de l'élément support et de manière mutuellement espacée, lesdites dents de connexion (31) étant interconnectées par paires, grâce à des nervures de rigidification (32).

8. Montant selon la revendication 7, **caractérisé en ce que** ledit élément support (6) présente une section transversale sensiblement rectangulaire, ledit conduit (5) et lesdites dents de connexion (31) faisant saillie dans deux sens mutuellement opposés par rapport audit élément support (6).

9. Montant selon la revendication 7, **caractérisé en ce que** lesdites dents de connexion (31) comprennent une pluralité d'ouvertures traversantes (33), agencées le long de deux rangées sensiblement mutuellement parallèles, et une fente (34) longitudinale agencée en une position intermédiaire entre lesdites deux rangées, ladite fente et lesdites ouvertures (33) permettant respectivement le positionnement de moyens d'interconnexion avec lesdits éléments de fixation (2) et de montage ensemble par encliquetage avec eux.

10. Montant selon une ou plusieurs des revendications précédentes, **caractérisé en ce que** lesdits éléments supports (6) présentent une première extrémité (35) ayant une surface munie d'un profil circulaire, convenant pour l'appairage géométrique avec un siège de forme complémentaire correspondante, formé dans une enceinte pour contenir le tableau.

11. Montant selon la revendication 10, **caractérisé en ce que** ledit élément support (6) présente une deuxième extrémité (36), située sensiblement à l'opposé de ladite première extrémité (35) et comprenant une patte fixée en une configuration sensiblement en porte-à-faux audit élément, une dent (38) étant formée en une position sensiblement transversale à l'extrémité libre de ladite patte et convenant pour venir en prise avec un siège correspondant, formé dans l'enceinte.

12. Tableau électrique, comprenant une enceinte de confinement, un ou plusieurs éléments de fixation (2), sur lesquels sont agencés des dispositifs électriques (3), convenant pour être connectés électriquement à un câble d'alimentation, et au moins deux montants (100), convenant pour être connectés auxdits un ou plusieurs éléments de fixation (2), **caractérisé en ce qu'**au moins l'un desdits montants (100) est constitué par un montant selon une ou plusieurs des revendications 1 à 11.
